# EUROPEAN PATENT SPECIFICATION

(11) **EP 0 396 375 B1**
(45) Date of publication and mention of the grant of the patent: **21.12.1994**
(21) Application number: 90304697.7
(22) Date of filing: 30.04.1990
(51) Int. Cl.: B01D 47/06, B01D 53/14

(54) **Method and apparatus for the treatment of a waste gas containing dusts and chemical contaminants**
Methode und Apparat zur Behandlung eines Staub und chemische Verunreinigungen enthaltenden Gases
Méthode et appareil pour le traitement d'un gaz d'échappement contenant de la poussière et des contaminants chimiques

(30) Priority: 02.05.1989 JP 112861/89; 13.03.1990 JP 62055/90
(43) Date of publication of application: 07.11.1990
(73) Proprietor: CHIYODA CORPORATION, Yokohama-shi Kanagawa-ken (JP)
(72) Inventor: Yanagioka, Hiroshi, Yokohama-shi, Kanagawa-ken (JP); Ogawa, Yoshio, Suginami-ku, Tokyo (JP); Komatsubara, Yoshiaki, Setagaya-ku, Tokyo (JP); Kobayashi, Kenji, Yokohama-shi, Kanagawa-ken (JP)
(74) Representative: Allam, Peter Clerk

(56) References cited:
- DE-A- 2 836 994
- US-A- 3 632 305
- PATENT ABSTRACTS OF JAPAN vol. 5, no. 120 (C-65)(792) 4 August 1981,& JP-A- 56-56214 (SATORU KUSAKABE) 18 May 1981
- Umwelt & Technik, vol .11, no. 5 May 1988, München, Germany, page 18 "Die Konzeption kommt dem Betreiber entgegen"

## Description

The present invention relates to a method and apparatus for the continuous treatment of a waste gas containing dusts and chemical contaminants. In a particular embodiment the present invention relates to a method for cooling, dust-elimination and desulfurization of a waste gas exhausted from various industrial plants as well as an apparatus for the cooling/dusts-elimination and the chemical treatment especially, desulfurization of a waste gas exhausted from various industrial plants.

In a wet process for desulfurizing waste gas, it is indispensable in the past to cool the waste gas prior to the desulfurization step wherein sulfur oxide compounds are eliminated by absorption. In the prior art desulfurization apparatus, therefore, a dusts-eliminating column where a circulation pump for a cooling liquid is employed is installed apart from the main desulfurization apparatus where sulfur oxide compounds are reacted and absorbed in an absorption liquid, and the cooling and dusts-elimination of the waste gas are carried out in that column prior to the desulfurization. As a result, the apparatus for such prior art desulfurization is large and its capital and operation costs are accordingly increased. With a view to omitting such dusts-elimination column, the present inventors previously proposed a method for obtaining a purged waste gas wherein a high temperature waste gas is brought into contact in a desulfurization device for reactively absorbing sulfur oxide with microparticles of a cooling liquid and microparticles of an absorbing liquid to capture contaminants contained in the waste gas with these liquid microparticles while cooling the waste gas with increased moisture, and thereafter the cooled waste gas is introduced through gas-dispersing pipes into an absorbing liquid where sulfur dioxide is eliminated by absorption (Japanese Laid-Open Patent Application No. Sho. 64-18427).

However, this method involves a number of problems; the waste gas to be introduced into the absorbing liquid contains both microparticles of cooling liquid and microparticles of absorbing liquid, and these microparticles, containing simple dusts, HCl, HF, Al and the like contaminants in the waste gas, cause dilution of the absorbing liquid. Further, incorporation of these contaminants into the absorbing liquid causes deterioration of the quality of desulfurization by-products, for example gypsum. What is more, the desulfurization performance itself of the apparatus is badly influenced by dilution of the absorbing liquid with the microparticles of the cooling liquid and incorporation of the absorbing liquid with the microparticles of the cooling liquid. Consequently, this method is not completely satisfactory in these respects, and it remains necessary for the waste gas to be cooled and treated, prior to being introduced into the absorbing liquid, in a separate dust-eliminating device to eliminate the microparticles of cooling liquid and dusts entrained therein. Such treatment is quite troublesome and also is economically unattractive.

Under these circumstances, there is a great demand to develop a new method and apparatus for the treatment of a waste gas thereby effecting the steps of cooling, dusts-elimination and chemical treatment of the waste gas efficiently in an apparatus which is smaller in size and capable of carrying out the steps continuously in a simple and economical manner.

In accordance with this invention there is provided a method for the continuous treatment of a waste gas containing dusts and chemical contaminants, which comprises spraying a cooling liquid as microdroplets of a mean particle size in the range 400-4000 µm into a flow of the waste gas; converting the flow of the waste gas to an ascending flow having a speed of 1-5 meters/sec whereby dusts contained in the waste gas are captured with the microdroplets of the cooling liquid and the dusts-captured microdroplets drop by their own gravity thereby separating the dusts from the waste gas; collecting the dusts-captured microdroplets of the cooling liquid; and bringing the waste gas from which dusts have been thus removed into contact with an absorbing liquid thereby absorbing chemical contaminants contained in the waste gas in the absorbing liquid.

The present invention also provides apparatus for the continuous treatment of a waste gas containing dusts and chemical contaminants, which comprises:
a vessel (1; 101) defining an upper chamber (A) for effecting removal of dusts therefrom, and a lower chamber (B) for chemically treating the waste gas with an absorbing liquid to remove chemical contaminants from the waste gas and in communication with said upper chamber (A) to receive dust-free waste gas therefrom;
inlet means (12; 112) for introducing a stream of the waste gas to be treated into said upper chamber;
spray means (13; 113) for spraying microdroplets of a cooling liquid into the stream of waste gas entering said upper chamber (A);
perpendicular wall means (9; 108) extending within said upper chamber (A) for causing the stream of waste gas in said chamber to flow upwardly therewithin before flowing into said lower chamber (B), whereby dusts in the waste gas which have been captured by the microdroplets of cooling liquid drop by gravity in said upper chamber (A) against the upward flow of the waste gas;
a collecting plate (5; 105) within said upper chamber for collecting the dusts-captured microparticles of the cooling liquid;
an effluent pipe (10; 110) for discharging the dusts-captured cooling liquid collected on said collecting plate (5; 105) from said upper chamber (A); and
an outlet (6; 106) for discharging dusts- and chemical contaminants-free waste gas from said lower chamber (B).

The method and apparatus of the present invention can be operated in a simple, economical and trouble-free manner. In the apparatus of the invention the cooling device and dust-eliminating device can be integrally combined in a single vessel, whereby the apparatus as a whole can be constructed in a smaller size than hitherto.

Claims 6-12 herein, more especially Claims 10-12, define preferred embodiments of the apparatus of the invention. Some examples of these preferred embodiments will now be described in detail below with reference to the accompanying drawings, in which:
Fig. 1 is an explanatory diagram showing a longitudinal cross-section of one example of a preferred embodiment of the apparatus of this invention;
Fig. 2 is a partially cut perspective view of the main body of the apparatus shown in Fig. 1;
Fig. 3 is an explanatory diagram showing a longitudinal cross-section of an example of another preferred embodiment of the apparatus of this invention;
Fig. 4 is a partially cut perspective view of the main body of the apparatus shown in Fig. 3;
Fig. 5 is an explanatory diagram showing a longitudinal cross-section of an example of still another preferred embodiment of the apparatus of this invention;
Fig. 6 is an explanatory diagram showing a longitudinal cross-section of yet a further preferred embodiment of the apparatus of this invention depicted in the same manner as in Fig. 5; and
Fig. 7 is an explanatory diagram showing a discharge pipe mounted in the collecting plate so as to be adjustable in height thereto.

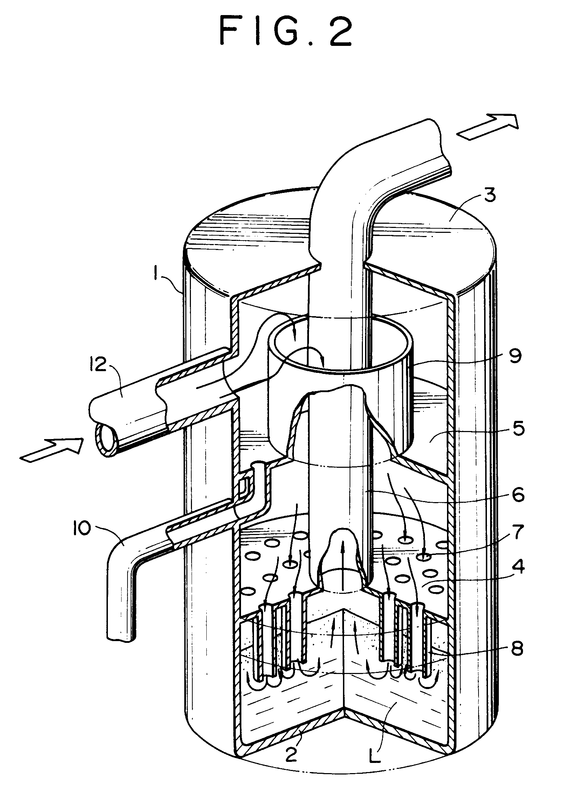

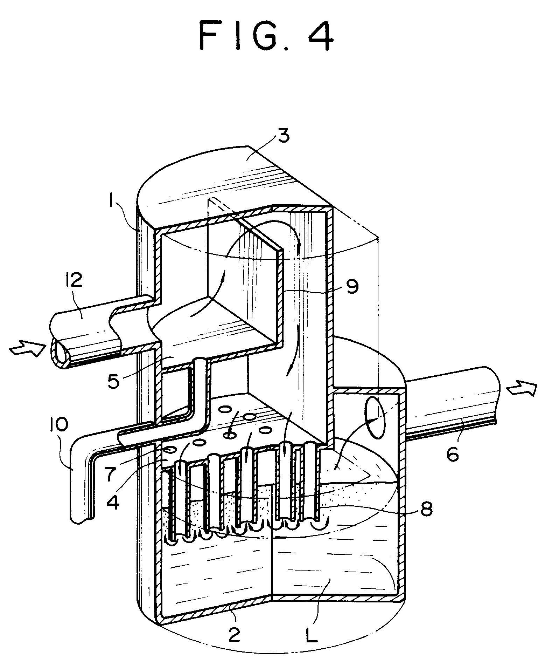

It is here mentioned that the sprayers or atomizers for the cooling liquid are omitted in Figs. 2 and 4.

Basically, the apparatus of this invention comprises a vessel or column wherein the upper part is exclusively used for the cooling/dusts-eliminating chamber and the lower part is used for the chemical treatment chamber because the separation of the cooling liquid is effected by its own gravity from the waste gas. In the cooling/dusts-eliminating chamber, water is advantageously used as the cooling liquid since water is economical and has no influence on the absorbing liquid used in the chemical treatment chamber even if contaminated to a small extent. The absorbing liquid to be charged into the chemical treatment chamber for a waste gas is suitably selected according to the type of the waste gas to be treated. In the case that the contaminants contained in the waste gas are acidic substances such as SO₂, SO₃, NO, N₂O₃, NO₂, N₂O₄, N₂O₅, HCl, HF, etc., an aqueous solution or slurry of an alkaline substance such as an alkali metal compound, alkaline earth metal compound, etc. can be used as the absorbing liquid. Especially, a slurry of calcium hydroxide or calcium carbonate is particularly preferable as the absorbing liquid. In the case of the chemical contaminant in the waste gas being sulfur dioxide, calcium hydroxide or carbonate in such slurry will react with sulfur dioxide and form calcium sulfite. In this case, the calcium sulfite can be converted into commercially valuable gypsum by introducing air or oxygen into the absorbing liquid. Alternatively, if the contaminant contained in the waste gas is a basic substance such as ammonia or an amine, an aqueous solution of an acidic substance such as hydrochloric acid can be used as the absorbing liquid. According to the nature of the contaminant, an alkaline or acidic aqueous solution may be used as the cooling liquid. In all events, both the cooling liquid and the absorbing liquid should be suitably selected according to the type of waste gas to be treated.

The cooling liquid is sprayed by a sprayer as microdroplets which ensures satisfactory contact with the waste gas. The sprayer for the cooling liquid may be any type of conventional device provided that it can form microdroplets of the cooling liquid. Examples of such sprayers include a rotary sprayer, a jet sprayer and two-fluid sprayer, etc.

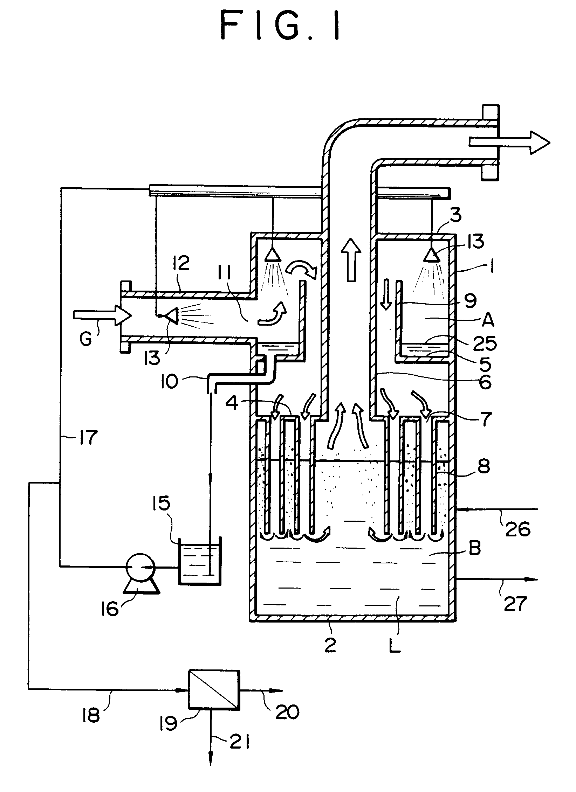

In Figs. 1 and 2 showing one example of the apparatus of this invention, a main body 1 of the apparatus is constructed as a confined vessel or container and consists of a dusts-eliminating chamber A for a waste gas occupying the upper half of the container and a chemical treatment chamber B for a dusts-free waste gas occupying the lower half of the container. The dusts-eliminating chamber A has a roof in the form of a top plate 3, and a cylindrical perpendicular bulkhead 9 positioned downwards at a distance from the top plate. A collecting plate 5 for a cooling liquid is horizontally interposed between the lower end of the bulkhead 9 and the side wall of the chamber A. The perpendicular wall forming the cylindrical perpendicular bulkhead 9 may have a cross section in the form of circle, semi-circle, square, rectangle and the like various shapes. The dusts-eliminating chamber A is provided on the side wall thereof with an opening 11 for the waste gas to which an inlet pipe 12 for the waste gas is connected. The uppermost end of the opening 11 is positioned below the upper end of the cylindrical perpendicular bulkhead 9 while the lowermost end of the opening 11 is positioned above the collecting plate 5. An effluent pipe 10 for the cooling liquid is open to the bottom of the collecting plate 5. The inlet pipe 12 may be mounted to the side wall in a tangential direction whereby a flow of the waste gas may ascend in the dusts-eliminating chamber while being rotated, so that the contact time of the droplets of the cooling liquid with the waste gas may be prolonged to enhance the dusts-eliminating effect and the cooling effect. A horizontal bulkhead 4 is interposed between the dusts-eliminating chamber A and the chemical treatment chamber B, and is provided with a number of holes 7 through which gas-dispersing pipes 8 are extended downwards and communicate with both chambers A and B. The diameter of the gas-dispersing pipes 8 is normally 5-50 cm. The horizontal bulkhead 4 is also opened in the central part thereof and a discharge pipe 6 for the treated waste gas is arranged in the central open part, extended upwards through the inside of the cylindrical perpendicular bulkhead 9 and penetrated through the top plate 3. The lower ends of the gas-dispersing pipes are positioned towards at a distance from the floor on bottom plate 2 of the chamber B. The lower ends of the gas-dispersing pipes 8 are preferably positioned 1-10 m higher than the bottom plate 2. The lower ends of the gas-dispersing pipes 8 are preferably provided with a number of apertures (not shown) for blowing out the waste gas over a certain distance (about 5-50 cm) from the lower end so that the waste gas may be blown out in horizontal direction at the lower end portion.

One or more sprayers 13 for the cooling liquid are mounted inside the inlet pipe 12 for the waste gas and/or in the chamber A above the collecting plate 5. The effluent pipe 10 is connected to a reservoir tank 15 which is connected to the sprayers 13 through a circulation pump 16 and a pipeline 17. A pipeline 18 joined to the pipeline 17 is connected to a dusts-separator 19. A pipeline 20 is a waste liquid pipe while the arrow 21 indicates the dusts separated as a solid. The chemical treatment chamber B is provided on the side wall thereof with a pipeline 26 for supplying the absorbing liquid and a pipeline 27 for discharging the absorbing liquid.

On carrying out the treatment of a waste gas containing dusts and chemical contaminants by using the apparatus shown in Figs. 1 and 2, for example, a high temperature waste smoke is introduced into the dust-eliminating chamber A through the inlet 12 pipe, and at the same time, a cooling liquid is sprayed from the sprayers 13 in the inlet 13 and the chamber A. The high temperature waste smoke is contacted with the droplets of the cooling liquid and cooled and simultaneously made moist. Most of the dusts contained in the waste smoke are captured with the droplets of the cooling liquid. The flow of the waste smoke containing the droplets of the cooling liquid is allowed to collide against the perpendicular bulkhead 9 and converted to an ascending flow. On the other hand, the droplets sprayed from the sprayer 13 drop downwards in the space of the chamber A to the collecting plate 5 to form a pool 25. As the velocity of the ascending flow is normally as slow as 1-5 meters/sec, a part of the dusts entrained in the flow drop under their own gravity together with the droplets of the cooling liquid to the collecting plate 5 where the dusts are captured with the pool 25. Whilst as a general rule, dusts in the form of microdroplets contained in a high temperature waste smoke are hardly separated from the gas, in the case of this invention, however, the dusts are brought into contact with droplets of the cooling liquid formed by spraying and captured with the droplets to form coarse particles which easily drop by their own enhanced gravity and with an increased dropping velocity to the pool 25. In the space of the chamber A, the flow velocity of the waste gas moving in horizontal direction is as slow as 1-5 meters/sec so that no sputtering phenomenon of the droplets is observed and the waste gas is efficiently separated from the droplets. Considering the contact efficiency with the waste gas and the separation efficiency from the waste gas, the mean particle size of the droplets of the cooling liquid sprayed from the spray is limited to the range of 400-4000 µm.

The cooled and dust-free waste gas from which the droplets of the cooling liquid have also been removed reaches the upper end opening of the cylindrical perpendicular bulkhead 9 and flows downwards through the gas-dispersing pipes 8 mounted to the horizontal bulkhead 4 to an absorbing liquid L in the chemical treatment chamber B where the gas is contacted with the absorbing liquid L to eliminate chemical contaminants contained in the gas by absorption. If the chemical contaminant contained in the gas is sulfur oxide compounds and the absorbing liquid is lime milk, the sulfur oxide compounds are reacted with calcium hydroxide in the lime milk to form gypsum. The waste gas from which the chemical contaminants have been eliminated is discharged out of the apparatus through the discharged pipe 6. As the waste gas to be introduced into the chemical treatment chamber B is well cooled, dusts-eliminated and contains substantially no droplets of the cooling liquid, the absorbing liquid L is not adversely influenced by the waste gas.

The pool 25 of the cooling liquid on the collecting plate 5 is introduced into the reservoir tank 15 through the effluent pipe 10 and then recycled to the sprayers 13 through the circulation pump 16 and the pipeline 17. A part of the cooling liquid is taken out through the pipeline 18 and conveyed to the dusts-separator 19 where the dusts in the cooling liquid are removed in such manner that the dusts are taken out from the line 21 while the waste water is discarded through the pipe 20. Fresh cooling water is supplied to the reservoir tank 15 according to the amount lost by evaporation and taken out from the pipe 20.

Various modifications can be made when a high temperature waste gas is brought into contact with the droplets of the cooling gas. For example, the cooling liquid is not always sprayed in both of the inlet pipe 12 and the chamber A, but can be confined to either one of these. Further, the number of the sprayers in the chamber A can be reduced by effecting the cooling of the waste gas substantially in the inlet pipe 12.

Spraying of the cooling liquid in the chamber A is carried out not only for cooling the waste gas but also for washing out a solid substance on the perpendicular bulkhead 9, which is formed by solidification of a viscous liquid containing dusts separated from the waste gas. The bulkhead is kept clean by being wetted uniformly with the cooling liquid.

The total spraying amount of the cooling liquid for cooling the waste gas can properly be determined by taking the amount of high temperature waste gas to be supplied, the temperature of the waste gas, the temperature of the cooling liquid, etc. into consideration. The ratio of the spraying amount of cooling liquid/the amount of high temperature waste gas is suitably about 0.5-5 by weight basis. In order to contact dusts in the high temperature waste gas intimately with the droplets of the cooling liquid so that the dusts may be captured sufficiently while the gas may be cooled enough, the upper end of the opening of the bulkhead 9 is preferably positioned 250-1500 mm higher than the uppermost end of the opening 11 for the waste gas. Although the bulkhead 9 is open at the upper end, it may be open on the side by forming an opening on the circumferential surface. The opening on the side may be any shape eg circular, triangular, square, etc. The upper end of the opening of the bulkhead 9 is preferably positioned at a distance of 300-3000 mm lower than the top plate of the chamber A.

In the apparatus shown in Figs, 1 and 2, the ratio of the area P, i.e. the cross-sectional area of the container 1 minus the cross-sectional area of the central opening defined by the perpendicular bulkhead 9, to the area Q, i.e. the cross-sectional area of the central opening defined by the perpendicular bulkhead 9 minus the cross-sectional area of the discharge pipe 6 P/Q is desirably determined to be in the range of 1-5 in order to maintain the cooling efficiency of the waste gas and the separation efficiency of the droplets of the cooling liquid from the waste gas at high levels and to minimize the apparatus in size. If the value of the ratio P/Q is smaller than 1 the ascending velocity of the waste gas in the chamber becomes excessively great and the separation efficiency of the droplets of the cooling liquid from the waste gas becomes poor so that a substantial amount of the droplets will be accompanied with the waste gas and incorporated into the absorbing liquid. On the other hand, if value of the area ratio P/Q exceeds 5 the flow rate or the gas descending through the gas-dispersing pipes 8 will be excessive so that the loss in gas pressure will be increased.

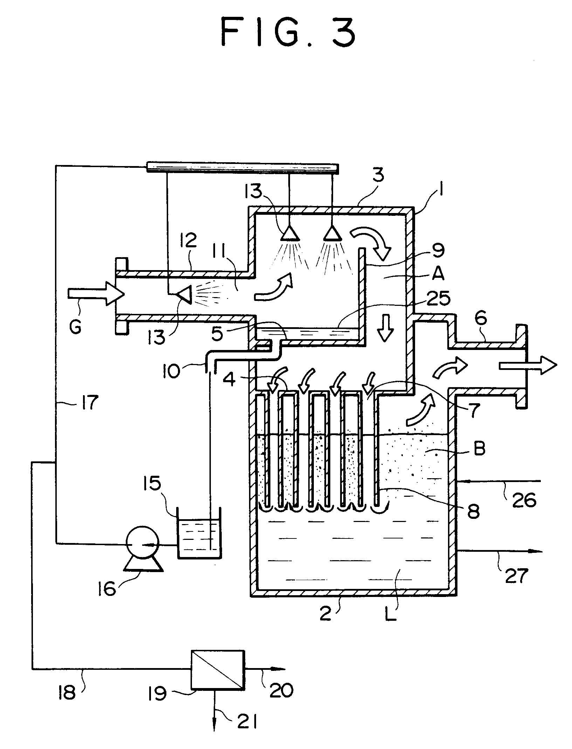

In Figs. 3 and 4, the apparatus has substantially the same structure as in the apparatus shown in Figs. 1 and 2 except that the perpendicular bulkhead 9 is constructed of panels in place of a cylinder, and that the discharge pipe 6 is mounted on the upper side wall of the chamber B instead of the top plate. The reference numerals used in Figs. 3 and 4 correspond to the reference numerals used in Figs. 1 and 2. The method for operating the apparatus shown in Figs. 3 and 4 is the same as in the case of Figs. 1 and 2.

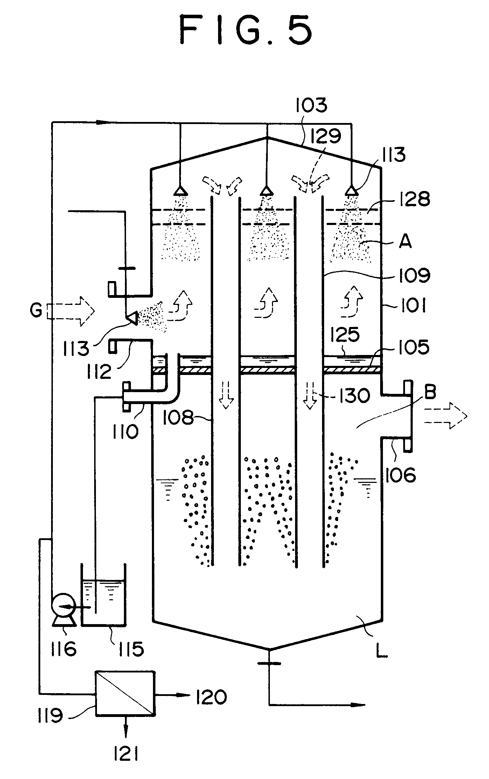

In Fig. 5 showing still another example of the apparatus of this invention, the apparatus comprises a container or tank 101 as a main body having in the upper side portion thereof an inlet pipe 112 for stream of a hot waste gas. The container is equipped at the top thereof with one or more sprayers 113 for spraying a cooling liquid and in the middle portion thereof with a horizontally arranged collecting plate 105 which is positioned in a transverse direction to the container 101 and mounted on the inner circumferential wall of the container in such manner that the collecting plate 105 is positioned downwardly distant from the sprayers and upwardly distant from the bottom of the container. One or more grid supports 128 are positioned in horizontal direction just below the sprayers 113 and mounted at the inner circumferential wall of the container or tank 101.

A waste gas discharged from industrial plants and still kept at a high temperature is introduced through the inlet pipe 112 into the container 101 while water as a cooling liquid is supplied to the sprayers 113 equipped to the roof 103 of the dusts-eliminating chamber A and sprayed as aqueous droplets. In the dusts-eliminating chamber A, the waste gas is brought into contact with aqueous droplets in a gas-liquid contact space in such manner that the hot waste gas moving upwards from the inlet pipe 112 is brought into contact space countercurrently with aqueous droplets moving downwards by gravity whereby the hot waste gas is rapidly cooled and dusts contained therein are captured with the aqueous droplets. A small proportion of contaminants in the waste gas, such as SO₂, HCl, HF, etc. are also absorbed by the aqueous droplets.

The cooled waste gas from which dusts and contaminants have been eliminated by intimate contact with the aqueous droplets is then allowed to enter in a chemical treatment chamber B formed in the lower portion of the container 101 just beneath the collecting plate 105 through one or more discharge pipes 108 which penetrate through the collecting plate 105 and are extended vertically in upward and downward direction in such manner that the upper terminal end of each pipe is open above the grid supports 128 and sufficiently above the gas-liquid contact space while the lower terminal end of each pipe is open in an absorbing liquid.

The aqueous droplets from the sprayers move downwards by gravity and are stored on the collecting plate 105. As the velocity of the upwardly moving waste gas is not high, dusts of a relatively large particle size entrained in the gas fall together with the aqueous droplets by gravity and are captured with the water stored in a water pool 125 formed on the plate 105. A part of the relatively fine dusts entrained in the waste gas may not be captured with the aqueous droplets but is coagulated to form coarse particles by wetting with the aqueous droplets. Such coagulated particles become greater in weight and in dropping velocity so that they too fall into pool 125 where they are captured with cooling liquid. In such manner, all of the dusts contained in the waste gas are removed. In the space just above the pool 125, the flow velocity of the waste gas moving in horizontal direction is rather small so that no sputtering phenomenon of the aqueous droplets is observed and the waste gas is efficiently separated from the aqueous droplets. The water which is stored in the pool 125 overflows through an effluent pipe 110 and is temporarily placed in a reservoir tank 115. The cooling liquid thus recovered may be recycled as required to the sprayers 113 by the aid of a circulation pump 116.

The waste gas treated in the dusts-eliminating chamber A is then passed through the discharge pipes 108, and blown into the absorbing liquid L. On bubbling the liquid L with the waste gas, chemical contaminants contained in the gas are absorbed in the liquid L. The waste gas thus purified is then released from the container 101 through a discharge pipe 106.

The temperature of the waste gas to be treated is usually within the range of 90-160°C and is reduced down to 50°C or less in the dusts-eliminating device. If desired, some modifications may be made in the cooling treatment of the waste gas usually carried out in the gas-liquid contact space 8.

As illustrated in Fig. 5, one modification of the dusts-eliminating chamber A as shown in Fig. 1 is that the inlet pipe 112 for the hot waste gas is equipped on the inner wall thereof with one or more sprayers 113 for effecting substantial cooling of the hot waste gas prior to introduction of the waste gas into the gas-liquid contact space in the dusts-eliminating chamber A. The sprayers 113 used in this variant may be any of the sprayers for a cooling liquid, such as a duct-sprayer of the same type as the sprayers and venturi. The waste gas can be cooled in this manner substantially to saturated state, i.e. 50-70°C. The use of this variant is advantageous in that the gas-dispersing pipes 108 may be made of a organic resinous material because the pipes are not contacted directly with the hot waste gas (90-160°C). Further, the use of this variant brings about such technical merits that the number of the sprayers 113 mounted to the upper part of the container 101 for cooling the waste gas may be decreased, or if the number of the sprayers 113 is not decreased, that the efficiency of cooling the waste gas can be enhanced.

According to another modification (not illustrated in Fig. 5), there is provided a second variant of the dusts-eliminating chamber A wherein the sprayers 113 are equipped to spray upwardly, for example, from the collection plate 105. In this modification, the flowing direction of the cooling liquid is same as that of the waste gas towards the inlet of the gas-dispersing pipes 108 in the upper portion of the chamber A so that the liquid-gas ratio L/G can comparatively be increased. Thus, this variant is advantageous in case of needing a high degree of cooling.

The amount of the cooling liquid is desirably more than that needed for the dual function (cooling and a combination of wetting and washing), e.g. an amount of 0.5 m³/m² hr. The cooling liquid in such amount or more is sufficient enough to wash out any solid deposit on the circumferential wall of the gas-dispersing pipes 108 to clean them.

The inlet pipe 112 for the waste gas may be mounted to the side of the container 101 in a tangential direction thereto. In this case, the waste gas ascends while being rotated around the inner surface of the container 101 whereby the contact time between the cooling liquid and the waste gas becomes longer. This mode is particularly advantageous in case of using a sprayer 113 in the inlet pipe 112. Taking various conditions into consideration, the size and position of the sprayers can be designed and the number thereof can also be determined to effect the desired degree of cooling of the waste gas. If the waste gas is completely cooled in a place other than the dusts-eliminating chamber A, cooling of the waste gas is no longer necessary in the chamber A. However, spraying of the cooling liquid in the chamber A is nonetheless more or less necessary since the spraying in the chamber A functions, in addition to cooling, to capture fine particles of dusts, wetting relatively coarse particles of dusts and washing dusts once collected as well as any solid matter deposited on the circumferential wall of the gas-dispersing pipes 108. Accordingly, it is desirable to adjust the degree of cooling in the chamber A and other places.

The amount of the cooling liquid sprayed can be varied according to the volume of a waste gas supplied, the temperature of the waste gas and other factors. Thus, no limitation exists in the amount of the cooling liquid used, and the amount can properly be determined by taking the above various factors and the contents of solid matters in the waste gas into consideration. In general, however, the ratio of the amount of the cooling liquid to the amount of a high temperature waste gas is desirably within the range of about 0.5-5 by weight. The opening at the upper end of the gas-dispersing pipes 108 is positioned above the uppermost portion of the inlet 112 for a waste gas preferably by a distance between 250 mm and 1500 mm, inclusive, in order that the waste gas is brought into intimate contact with the droplets of the cooling liquid thereby cooling the gas sufficiently and satisfactorily capturing dust particles entrained in the gas. The opening of the gas-dispersing pipes 108 may be formed upwardly at the upper end thereof as shown in Fig. 5 or may be formed in the side wall thereof. The gas-dispersing pipes 108 may be any shape in cross section, for example, circular, triangular, square, etc. The opening of the pipes 108 is desirably positioned below the top plate 103 by a distance between 50 mm and 500 mm, inclusive.

The gas-dispersing pipes 108 may be of any material which is inert to the waste gas and stable to a temperature up to about 180 °C. For example, glass tubes, porcelain pipes, metal pipes such as stainless steel pipes can be used without problems. If the waste gas can be cooled significantly prior to being introduced into the chamber A, however, a resinous pipes such as made of polyvinyl chloride or polyolefin can be used as the pipes 108.

It is preferable in the present invention that the ratio of the total cross sectional area X of the gas-dispersing pipes to the surface area Y of the collecting plate minus the opening area of the gas-dispersing pipes, i.e. X/Y, is within the range of 1/20 - 1/1. If the ratio X/Y is smaller than 1/20, the apparatus will need to be large in size if treating a great deal of waste gas and so make itself economically unattractive. On the other hand, if the ratio X/Y is larger than 1/1, the ascending velocity of a waste gas will be too high to maintain a high gas/liquid separation efficiency.

In the embodiment of Fig. 5 the position of the collecting plate 105 in the container 101 is generally determined by taking various factors in the operation such as the amount of a high temperature waste gas supplied, the amount of a cooling liquid sprayed, etc., into consideration. For example, the collecting plate 105 is preferably mounted in the container 101 in a position below the sprayers 113 and at a distance of 300 mm from the lowermost end of the inlet 112 in case of the operation wherein a waste gas having a temperature of 130-160 °C is supplied at a superficial velocity of 1.0-3.0 m/sec based on the area of the collecting plate while a cooling liquid having a temperature of 60 °C is sprayed at a rate of 1.2 m³/m² hour based on cross section of the container, i.e. per area of the collecting plate.

The cooling liquid in the pool 125 can repeatedly be used as a cooling liquid for the waste gas. On recycling of the cooling liquid, it overflows through the effluent pipe 110 when the amount of the cooling liquid in the pool 125 exceeds the height of the effluent pipe 110. The overflowing liquid is then placed temporarily in the reservoir tank 115 where the liquid may be cooled according to its temperature with a cooling device (not shown) and/or may be filtered by the aid of a filtering device (not shown) to remove solid matter captured with the liquid. If using a filtering device, the cooling plate 105 may be slightly inclined to prevent any deposition of the solid matter on the plate 105. Such cooling device and/or filtering device may be equipped, if desired, on the collecting plate 105 itself or in a passageway through which the overflowing liquid is conveyed to the reservoir tank 115. A part of the liquid may be taken out without being recycled to the sprayers 113 and subjected to liquid/solid separation in any type of the separator 119 where the solid matter such as dusts contained in the gas are separated and discarded through a line 121 while the dust-free liquid is also discharged as an effluent through a line 120.

In the chemical treatment chamber B, the dusts-free cooled waste gas is bubbled into the absorbing liquid L. The waste gas, if it contains sulfur dioxide as the chemical contaminant, is completely desulfurized in this chamber B in such manner that sulfur dioxide contained in the gas is absorbed in the absorbing liquid L such as lime milk while the waste gas ascends in the liquid L as small bubbles whereby a dispersion of industrially pure gypsum, for example, is produced as a by-product. The gas thus purified is collected in the upper space of the chamber B and discharged out of the container 101 through the exhaust pipe 6 while the dispersion of gypsum is discharged as such from the bottom of the container 101. Calcium sulfite initially formed is naturally auto-oxidized to form a slurry of gypsum or positively oxidized by blowing oxygen or air thereinto to shorten the time for oxidation.

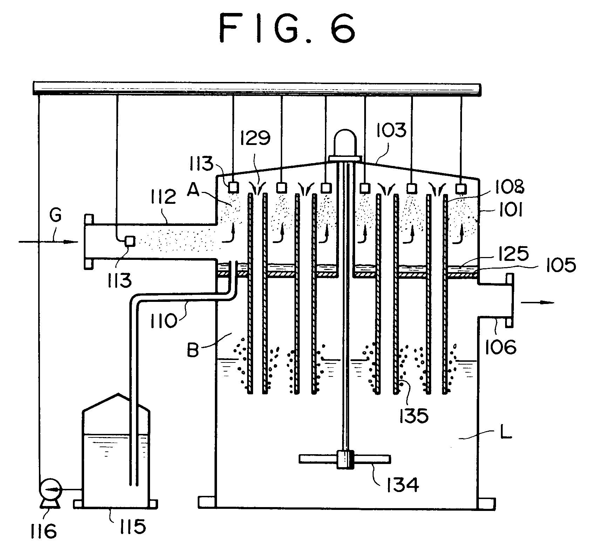

Fig. 6 show a further example of the apparatus of this invention for carrying out cooling, dusts-eliminating and chemical treatment in a single apparatus. This apparatus wherein the cooling/dusts-eliminating chamber A and the chemical treatment chamber B are integrally combined is particularly suitable for carrying out the wet method for desulfurization of a waste gas as disclosed in Japanese Patent Publn. No. Sho. 60-4726.

In Fig. 6, the reference numerals used have the same meanings as for Fig. 5. The container 101 is provided at is central perpendicular axis with a stirrer 134. In a typical operation, a waste gas G having a temperature of 150 °C was supplied through inlet 112 into the container 101 at a superficial velocity of 1.5 m/sec based on the area of the cross section of container 101, while water as the cooling liquid having a temperature of 57 °C was sprayed from the sprayers 113 whereby the gas was allowed to ascend in the container as indicated by the arrows and brought into intimate contact countercurrently with the aqueous droplets in the chamber A. The temperature of the waste gas was cooled down to 57.6 °C. On the other hand, the aqueous droplets capturing relatively small dust particles and wetted relatively large dust particles fell by their own gravity and combined with the water 125 on the collecting plate 115. The dusts and contaminants contained in the waste gas could be separated from the gas in this manner, and cooling of the gas was also attained simultaneously.

In the arrangement of Fig. 6, the water in the pool 125 on the collecting plate 105 overflows through the effluent pipe 110 and is temporarily stored in the reservoir tank 115. The water in the tank 115 is then recycled by the aid of the circulation pump 116 to the sprayers 113 through a passageway directly or after being passed through a cooling device, and can again be used as the cooling liquid.

In the embodiment shown in Fig. 6, the gas-dispersing pipes 108 for the cooled dust-free waste gas are positioned in such manner that the opening of the pipes 108 at the uppermost end thereof is positioned above the uppermost portion of the inlet pipe 112 by a distance of 600 mm and the top plate 103 of the container 101 by a distance of 100 mm. The sprayer 113 are positioned as shown in Fig. 6, below the top plate 103 by a distance of 200 mm and in the internal space of the inlet pipe 112 outside the container 101, respectively.

The waste gas introduced from the inlet pipe 112 impinges against the outer wall of a number of the gas-dispersing pipes 108 standing upright whereby dusts entrained in the gas also impinge together with the aqueous droplets against the outer all by the force of inertia and are thus separated effectively from the waste gas. After the cooled waste gas has been separated from solid matter in the chamber A between the collecting plate 105 and the top plate 103 of the container 101, the efficiency of the gas/liquid separation at the entrance of the gas-dispersing pipes 108 is usually higher than about 98%.

A grid support (not shown in Fig. 6) but similar to grid support 128 in Fig. 5, supporting a number of the sprayers 113 may also support a number of the gas-dispersing pipes 108 so as to prevent vibration of the pipes by the stirring of the absorbing liquid L. In the chamber B, the pipes 108 are preferably perforated over a certain distance from the lower end thereof to facilitate blowing of the gas into the absorbing liquid L. In order to enhance absorption of chemical contaminants contained in the gas with the absorbing liquid L, a stirrer 134 is preferably used for stirring the liquid L. The gas thus purified is discharged out of the container 111 through the exhaust pipe 6 directly or after being passed through a mist-eliminator (not shown).

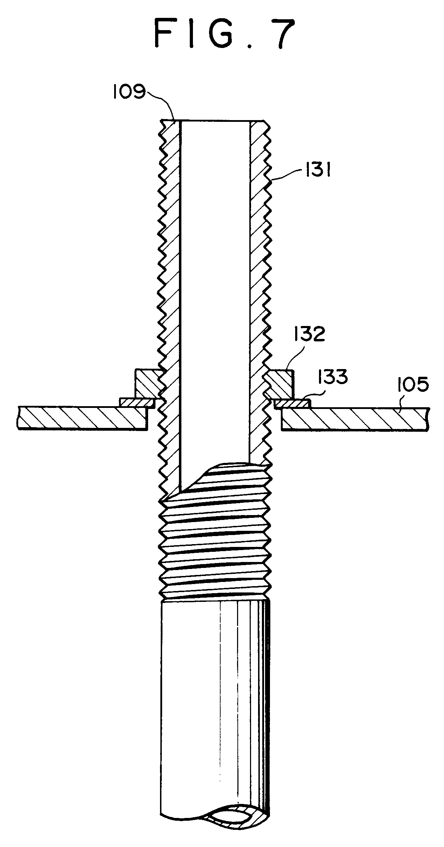

In Fig. 7 showing a gas-dispersing pipe 108 mounted on the collecting plate 105 so as to be adjustable in height relatively thereto, the gas-dispersing pipe 108 is screw-threaded on its outer circumferential wall over a given distance from the upper end thereof. The threads 131 of the gas-dispersing pipe are engageable with a disk 132 screw-threaded on its inner wall. A given number of openings are formed in the collecting plate 105 by boring, through which the gas-dispersing pipes 108 are penetrated. In actual use, the pipes are mounted on the collecting plate 105 through a washer 133 and the disk 132. The height of the upper end of the gas-dispersing pipes 108 from the collecting plate 105 and simultaneously the depth of the lower end of the pipes in the absorbing liquid can easily be adjusted by a screw-movement of the disk 133 relative to the pipe in the vertical direction. A packing (not shown) may be interposed, if desired, between the disk 132 and the washer 133 or between the washer 133 and the collecting plate 105 to prevent any leakage of a cooling liquid on the collecting plate 105. The degree of cooling and dusts-elimination can freely be controlled by adjusting the height of the upper end of the pipes 108 from the collecting plate 105.

By means of the method of this invention, cooling of a waste gas, dusts-elimination of a waste gas and absorption of chemical contaminants contained in a waste gas can be effected at the same time and at a high efficiency. The apparatus of this invention comprises, in a single vessel, two chambers for effecting, respectively, cooling/dusts-elimination and absorption of chemical contaminants, and is capable of operating these different steps continuously at the same time. Accordingly, this apparatus is efficient and economically advantageous since the conventional desulfurization apparatus necessitates an independent cooling or dusts-eliminating device in addition to the desulfurization device. It is a merit of this invention that as the area of the collecting plate is large it is possible to introduce a large amount of the waste gas to be treated. Additionally as a pool of the cooling liquid is formed on the collecting plate, the cooling liquid absorbs the descending droplets which have captured relatively small dusts and relatively large wetted dusts particles, whereby dusts-elimination is promoted. It is also a merit of this invention that the apparatus can be minimized in size and the efficiency of the chamber A can be increased by specifically adjusting the ratio of the total cross sectional area of the gas-dispersing pipes to the useful surface area of the collecting plate ie excluding the opening area of the gas-dispersing pipes. It is an additional merit of this invention that the position of the gas dispersing pipes can properly be determined according to various factors such as the temperature and the amount of a waste gas introduced and the temperature and the amount of cooling liquid sprayed because the gas-dispersing pipes are mounted on the collecting plate in such manner that the opening of each gas-dispersing pipe at the upper end thereof is positioned higher than the uppermost portion of the gas inlet and vertically at a distance from the collecting plate. It is further merit of the apparatus of this invention that both the efficiency of cooling the waste gas and the efficiency of dusts-elimination can be enhanced significantly so that an increase in the amount of water or dilution of the absorbing liquid in the chemical treatment chamber can be prevented.

If the chemical contaminants contained in the waste gas are substantially sulfur oxide compounds, a suspension of lime or limestone can be used as the absorbing liquid. In this case, an advantage achieved by the present invention in that various impurities contained in the waste gas, for example, dusts, acidic contaminants such as HCl, HF, etc. are eliminated in the dusts-eliminating chamber and so the quality of gypsum as by-product can be improved.

Accordingly, the method and apparatus of this invention can be widely used for treating various kinds of waste gas containing dusts and chemical contaminants and may also be used for the cleaning treatment of a gas containing small or large amounts of dusts and liquid droplets without cooling the gas whereby such dusts and liquid droplets can be separated from the gas.

## Claims

1. A method for the continuous treatment of a waste gas containing dusts and chemical contaminants, which comprises spraying a cooling liquid as microdroplets of a mean particle size in the range 400-4000 µm into a flow of the waste gas; converting the flow of the waste gas to an ascending flow having a speed of 1-5 meters/sec whereby dusts contained in the waste gas are captured with the microdroplets of the cooling liquid and the dusts-captured microdroplets drop by their own gravity thereby separating the dusts from the waste gas; collecting the dusts-captured microdroplets of the cooling liquid; and bringing the waste gas from which dusts have been thus removed into contact with an absorbing liquid thereby absorbing chemical contaminants contained in the waste gas in the absorbing liquid.

2. A method according to Claim 1, wherein the cooling liquid is water.

3. A method according to Claim 1 or Claim 2, wherein the waste gas contains sulfur oxide compounds as chemical contaminants while the absorbing liquid is a desulfurizing liquid.

4. A method according to Claim 3, wherein the desulfurizing liquid is a suspension of lime or crushed limestone.

5. Apparatus for the continuous treatment of a waste gas containing dusts and chemical contaminants, which comprises:
a vessel (1; 101) defining an upper chamber (A) for effecting removal of dusts therefrom, and a lower chamber (B) for chemically treating the waste gas with an absorbing liquid to remove chemical contaminants from the waste gas and in communication with said upper chamber (A) to receive dust-free waste gas therefrom;
inlet means (12; 112) for introducing a stream of the waste gas to be treated into said upper chamber;
spray means (13; 113) for spraying microdroplets of a mean particle size in the range 400-4000 µm of a cooling liquid into the stream of waste gas entering said upper chamber (A);
perpendicular wall means (9; 108) extending within said upper chamber (A) for causing the stream of waste gas in said chamber to flow upwardly therewithin before flowing into said lower chamber (B), whereby dusts in the waste gas which have been captured by the microdroplets of cooling liquid drop by gravity in said upper chamber (A) against the upward flow of the waste gas;
a collecting plate (5; 105) within said upper chamber for collecting the dusts-captured microparticles of the cooling liquid;
an effluent pipe (10; 110) for discharging the dusts-captured cooling liquid collected on said collecting plate (5; 105) from said upper chamber (A); and
an outlet (6; 106) for discharging dusts- and chemical contaminants-free waste gas from said lower chamber (B).

6. Apparatus according to Claim 5, wherein said spray means (13; 113) are mounted in said inlet means (12; 112) for the waste gas and/or in said upper chamber (A).

7. Apparatus according to Claim 5 or Claim 6, wherein a horizontal bulkhead (4; 105) is interposed between said upper chamber (A) and said lower chamber (B), and wherein a plurality of pipes (8; 108) serving to put said lower chamber (B) into communication with said upper chamber (A) to receive dust-free waste gas therefrom extend downwardly from said bulkhead (4; 105) into said lower chamber (B).

8. Apparatus according to Claim 7, wherein said upper surface of said bulkhead (105) provides said collecting plate within said upper chamber (A).

9. Apparatus according to Claim 8, wherein said pipes (108) also extend upwards from said bulkhead (105) into said upper chamber (A), the exterior surface of said pipes forming said perpendicular wall means.

10. Apparatus according to Claim 5, wherein said upper chamber (A) is provided therewithin with a cylindrical, perpendicularly extending bulkhead (9) whose upper end is spaced from the roof (3) of said upper chamber, said perpendicular bulkhead (9) providing said perpendicular wall means, and said collecting plate (5) being located around the lower end of said perpendicular bulkhead (9) extending horizontally to the side walls of said upper chamber (A);
wherein said inlet means (12) for introducing the waste gas comprises an opening (11) in a side wall of the upper chamber (A) whose upper end is positioned below said upper end of said perpendicular bulkhead (9) and whose lower end is positioned above said collecting plate (5), and an inlet pipe (12) connected to said opening (11);
wherein a horizontal bulkhead (4) is interposed between said upper chamber (A) and said lower chamber (B);
wherein a plurality of pipes (8) serving to put said lower chamber (B) into communication with said upper chamber (A) to receive dust-free waste gas therefrom extend downwardly from said horizontal bulkhead (4) into said lower chamber (B);
wherein said outlet (6) for discharging dusts- and chemical contaminants-free waste gas from said lower chamber (B) is arranged to extend upwards through the interior of said cylindrical bulkhead (9) from a central open part of said horizontal bulkhead, said outlet (6) extending through said roof (3) of said upper chamber; and
wherein said spray means (13) are mounted inside said inlet pipe (12) and/or in said upper chamber (A).

11. Apparatus according to Claim 5, wherein said upper chamber (A) is provided therewithin with a perpendicular plate-like bulkhead (9) whose upper end is spaced from the roof (3) of said upper chamber, said perpendicular bulkhead (9) providing said perpendicular wall means, and said collecting plate (5) extending horizontally between the lower end of said perpendicular bulkhead and a side wall of said upper chamber (A);
wherein said inlet means for introducing the waste gas comprises an opening (11) in a side wall of said upper chamber (A) whose upper end is positioned below said upper end of said perpendicular bulkhead (9) and whose lower end is positioned above said collecting plate (5), and an inlet pipe (12) connected to said opening (11);
wherein a horizontal bulkhead (4) is interposed between said upper chamber (A) and said lower chamber (B);
wherein a plurality of pipes (8) serving to put said lower chamber (B) into communication with said upper chamber (A) to receive dust-free waste gas therefrom extend downwardly from said horizontal bulkhead (4) into said lower chamber (B);
wherein said outlet (6) for discharging dusts- and chemical contaminants-free waste gas from said lower chamber (B) leads from the upper side wall of said lower chamber (B); and
wherein said spray means (13) are mounted inside said inlet pipe (12) and/or in said upper chamber (A).

12. Apparatus according to Claim 5, wherein said inlet means for introducing the waste gas comprises an opening in a side wall of the upper chamber (A) and an inlet pipe (112) connected to said opening;
wherein said outlet (106) for discharging dusts- and chemical contaminants-free waste gas from said lower chamber (B) is provided on a side wall of said lower chamber;
wherein said collecting plate (105) is horizontally interposed between said upper chamber (A) and said lower chamber (B);
wherein one or more pipes (108) penetrate through said collecting plate to put said lower chamber (B) into communication with said upper chamber (A) to receive dust-free waste gas therefrom, said one or more pipes (108) each extending upwards into the upper chamber (A) so that its upper end is positioned above said gas inlet opening but below the roof (103) of the upper chamber (A), and downwards into said lower chamber (B) so that its lower end is positioned below said gas outlet (106) but above the floor of said lower chamber (B), the exterior surfaces of said one or more pipes (108) extending into said upper chamber forming said perpendicular wall means; and
wherein said spray means (113) are mounted inside said inlet pipe (112) and/or in said upper chamber (A).

## Patentansprüche

1. Verfahren zur kontinuierlichen Behandlung eines Stäube und Schadstoffe enthaltenden Rauchgases, das folgende Schritte umfaßt: das Einsprühen einer Kühlflüssigkeit in Form von feinen Tröpfchen mit einer mittleren Tröpfchengröße zwischen 400 und 4000 µm in einen Rauchgasstrom; das Umlenken des Rauchgases zur Bildung eines Aufwärtsstroms mit einer Strömungsgeschwindigkeit von 1-5 m/s, wobei die in dem Rauchgas enthaltenen Staubpartikel von den feinen Tröpfchen der Kühlflüssigkeit aufgenommen werden und die feinen Tröpfchen mit den eingeschlossenen Staubpartikeln aufgrund ihrer eigenen Schwere nach unten tropfen, so daß die Staubpartikel aus den Rauchgasen abgeschieden werden; das Auffangen der feinen Tröpfchen der Kühlflüssigkeit mit den eingeschlossenen Staubpartikeln; und das Dispergieren des entstaubten Rauchgases in der Absorptionsflüssigkeit, so daß die in dem Rauchgas enthaltenen Schadstoffe von der Absorptionsflüssigkeit aufgenommen werden.

2. Verfahren nach Anspruch 1, bei dem als Kühlflüssigkeit Wasser eingesetzt wird.

3. Verfahren nach Anspruch 1 oder 2, bei dem das Rauchgas Schwefeloxidverbindungen als Schadstoffe enthält und es sich bei der Absorptionsflüssigkeit um eine Entschwefelungsflüssigkeit handelt.

4. Verfahren nach Anspruch 3, bei dem die Entschwefelungsflüssigkeit eine Suspension von Kalk oder zerkleinertem Kalkstein ist.

5. Apparat zur kontinuierlichen Behandlung eines Stäube und Schadstoffe enthaltenden Rauchgases, der folgendes umfaßt:
einen Behälter (1; 101), der aus einer oberen Kammer (A) für die Entstaubung des Rauchgases und aus einer unteren Kammer (B) zur Behandlung des Rauchgases mit einer Absorptionsflüssigkeit zur Entfernung von Schadstoffen aus dem Rauchgas besteht, wobei diese untere Kammer (B) mit der oberen Kammer (A) verbunden ist und somit das entstaubte Rauchgas in erstere gelangen kann;
Eintrittsvorrichtungen (12; 112) zur Zuführung eines Stroms des Rauchgases, dessen Behandlung in der oberen Kammer erfolgen soll;
Sprühvorrichtungen (13; 113) zum Einsprühen der feinen Tröpfchen einer Kühlflüssigkeit mit einer mittleren Tröpfchengröße zwischen 400 und 4000 µm in den in die obere Kammer (A) eintretenden Rauchgasstrom;
senkrechte Wandungseinrichtungen (9; 108), die in die obere Kammer (a) eingebaut sind, so daß der Rauchgasstrom in dieser Kammer nach oben gelenkt wird, bevor er in die untere Kammer (B) geleitet wird, wodurch sich die von den feinen Tröpfchen der Kühlflüssigkeit aus dem Rauchgas aufgenommenen Staubpartikel durch ihre Schwere entgegen dem Aufwärtsstrom des Rauchgases in der oberen Kammer (A) nach unten bewegen;
eine Abscheideplatte (5; 105) innerhalb der oberen Kammer zum Auffangen der feinen Tröpchen der Kühlflüssigkeit, die die Staubpartikel aufgenommen haben;
ein Ablaufrohr (10; 110) zum Ablassen der die Staubpartikel enthaltenden Kühlflüssigkeit, die von der Abscheideplatte (5; 105) aufgefangen wurde, aus der oberen Kammer (A);
einen Austrittskanal (6; 106) zum Ableiten des entstaubten und von Schadstoffen gereinigten Rauchgases aus der unteren Kammer (B).

6. Apparat nach Anspruch 5, bei dem die Sprühvorrichtungen (13; 113) in die Eintrittsvorrichtungen (12; 112) für das Rauchgas und/oder in die obere Kammer (A) installiert sind.

7. Apparat nach Anspruch 5 oder 6, bei dem eine waagerechte Trennwand (4; 105) zwischen der oberen Kammer (A) und der unteren Kammer (B) eingebaut ist und bei dem von dieser Trennwand (4; 105) eine Vielzahl von Rohren (8; 108) zur Herstellung einer Verbindung zwischen der unteren Kammer (B) und der oberen Kammer (A) in die untere Kammer (B) führen, damit in diese entstaubtes Rauchgases gelangen kann.

8. Apparat nach Anspruch 7, bei dem die Außenfläche der Trennwand (105) als Abscheideplatte in der oberen Kammer (A) dient.

9. Apparat nach Anspruch 8, bei dem zudem die Rohre (108) von der Trennwand (105) nach oben in Kammer (A) geführt sind und die Außenfläche der Rohre als die senkrechten Wandungseinrichtungen dienen.

10. Apparat nach Anspruch 5, bei dem die obere Kammer (A) im Inneren mit einer zylindrischen senkrechten Trennwand (9) ausgestattet ist, deren Oberkante in einem bestimmten Abstand zur Decke (3) der oberen Kammer angeordnet ist, wobei die senkrechte Trennwand (9) als die senkrechten Wandungseinrichtungen dient, und bei dem die Abscheideplatte (5) um die Unterkante der senkrechten Trennwand (9) und horizontal zu den Seitenwänden der oberen Kammer (A) angeordnet ist;
bei dem zu den Eintrittsvorrichtungen (12) für das Rauchgas eine Öffnung (11) in einer Seitenwand der oberen Kammer (A), deren Oberkante unterhalb der Oberkante der senkrechten Trennwand (9) und deren Unterkante oberhalb der Abscheideplatte (5) angeordnet sind, sowie ein Eintrittsrohr (12) gehören, das mit der Öffnung (11) verbunden ist;
bei dem die waagerechte Trennwand (4) zwischen der oberen Kammer (A) und der unteren Kammer (B) eingebaut ist;
bei dem eine Vielzahl von Rohren (8), durch die die untere Kammer (B) und die obere Kammer (A) miteinander verbunden werden, so daß in erstere das entstaubte Rauchgas aus letzterer gelangen kann, von der waagerechten Trennwand (4) in die untere Kammer (B) führt;
bei dem der Austrittskanal (6) zum Ableiten des von Staubpartikeln und Schadstoffen gereinigten Rauchgases aus der unteren Kammer (B) so angeordnet ist, daß er sich von einer mittigen Öffnung der waagerechten Trennwand aus nach oben durch die zylindrische Trennwand (9) erstreckt, und dieser Austrittskanal (6) durch die Decke (3) der oberen Kammer geführt ist;
bei dem die Sprühvorrichtungen (13) in das Eintrittsrohr (12) und/oder in der oberen Kammer (A) installiert sind.

11. Apparat nach Anspruch 5, bei dem in die obere Kammer (A) eine senkrechte Trennwand (9) eingebaut ist, deren Oberkante sich in einem bestimmten Abstand zur Decke (3) der oberen Kammer (A) befindet, wobei die senkrechte Trennwand (9) als senkrechte Wandungseinrichtungen dient, und bei dem die Abscheideplatte (5) waagerecht zwischen Unterkante der senkrechten Trennwand und der Seitenwand der oberen Kammer (A) eingebaut ist;
bei dem zu den Eintrittsvorrichtungen für die Zufuhr des Rauchgases eine Öffnung (11) in einer Seitenwand der oberen Kammer (A), deren Oberkante unterhalb der Oberkante der senkrechten Trennwand (9) und deren Unterkante oberhalb der Abscheideplatte (5) angeordnet ist, und das mit der Öffnung (11) verbundene Eintrittsrohr (12) gehören;
bei dem die waagerechte Trennwand (4) zwischen der oberen Kammer (A) und der unteren Kammer (B) eingebaut ist;
bei dem eine Vielzahl von Rohren (8), durch die die untere Kammer (B) mit der oberen Kammer (A) verbunden wird, so daß in erstere das entstaubte Rauchgas aus letzterer gelangen kann, von der waagerechten Trennwand (4) nach unten in die untere Kammer führt;
bei dem der Austrittskanal (6) zum Ableiten des von Staubpartikeln und Schadstoffen gereinigten Rauchgases aus der unteren Kammer (B) im oberen Bereich der Seitenwand der unteren Kammer (B) eingebaut ist; und
bei dem die Sprühvorrichtungen (13) in das Eintrittsrohr (12) und/oder in die obere Kammer (A) installiert sind.

12. Apparat nach Anspruch 5, bei dem zu den Eintrittsvorrichtungen für die Zufuhr des Rauchgases eine Öffnung in einer Seitenwand der oberen Kammer (A) und ein mit dieser Öffnung verbundenes Eintrittsrohr (112) gehören;
bei dem der Austrittskanal (106) für die Ableitung des von Staubpartikeln und Schadstoffen gereinigten Rauchgases aus der unteren Kammer (B) an einer Seitenwand der unteren Kammer vorgesehen ist;
bei dem die Abscheideplatte (105) waagerecht zwischen der unteren Kammer (A) und der oberen Kammer (B) eingebaut ist;
bei dem ein Rohr oder mehrere Rohre (108) durch die Abscheideplatte geführt ist/sind und damit die untere Kammer (B) mit der oberen Kammer (A) verbunden wird, so daß in erstere das entstaubte Rauchgas aus letzterer gelangen kann, wobei das eine Rohr oder die Anzahl von Rohren (108) so weit in die obere Kammer (A) geführt ist/sind, daß sich seine/ihre Oberkante oberhalb der Gaseintrittsöffnung, jedoch unterhalb der Decke (103) der oberen Kammer (A) befindet, und so weit in die untere Kammer (B) geführt ist/sind, daß sich seine/ihre Unterkante unterhalb der Austrittsöffnung (106), jedoch oberhalb des Bodens der unteren Kammer (B) befindet, wobei die Außenflächen des Rohrs/der Rohre (108) in die untere Kammer reichen und als senkrechte Wandungseinrichtungen dienen; und
bei dem die Sprühvorrichtungen (113) in das Eintrittsrohr (112) und /oder in die obere Kammer (A) eingebaut sind.

## Revendications

1. Procédé pour le traitement continu d'un gaz brûlé contenant des poussières et des contaminants chimiques, qui comprend la pulvérisation d'un liquide de refroidissement sous la forme de micro-gouttelettes d'une dimension granulométrique moyenne comprise dans la gamme de 400-4000 µm dans un courant du gaz brûlé; la conversion du courant du gaz brûlé en un courant ascendant ayant une vitesse de 1-5 mètres/seconde, de telle sorte que les poussières contenues dans le gaz brûlé sont capturées avec les micro-gouttelettes du liquide de refroidissement et les micro-gouttelettes capturées avec les poussières tombent du fait de leur propre gravité, séparant ainsi les poussières du gaz brûlé; la récupération des micro-gouttelettes du liquide de refroidissement capturées avec les poussières; et la mise en contact du gaz brûlé d'où les poussières ont été enlevées avec un liquide absorbant, si bien que les contaminants chimiques contenus dans le gaz brûlé sont absorbés par le liquide absorbant.

2. Procédé selon Revendication 1, dans lequel le liquide de refroidissement est de l'eau.

3. Procédé selon Revendication 1 ou Revendication 2, dans lequel le gaz brûlé contient des composés d'oxyde de soufre comme contaminants chimiques, tandis que le liquide absorbant est un liquide désulfuré.

4. Procédé selon Revendication 3, dans lequel le liquide désulfurant est une suspension de chaux ou de calcaire broyé.

5. Dispositif pour le traitement continu d'un gaz brûlé contenant des poussières et des contaminants chimiques, qui comprend:
un récipient (1; 101) définissant une chambre supérieure (A) pour l'enlèvement efficace des poussières qu'il contient, et une chambre inférieure (B) pour le traitement chimique du gaz brûlé avec un liquide absorbant pour enlever les contaminants du gaz brûlé et en communication avec ladite chambre supérieure (A) pour en recevoir le gaz brûlé exempt de poussière;
un moyen d'entrée (12; 112) pour introduire un courant du gaz brûlé à traiter dans ladite chambre supérieure;
un moyen de pulvérisation (13; 113) pour pulvériser des micro-gouttelettes d'une dimension granulométrique moyenne dans la gamme de 400-4000 µm d'un liquide de refroidissement dans le courant de gaz brûlé entrant dans ladite chambre supérieure (A);
un moyen de paroi perpendiculaire (9; 108) s'étendant dans ladite chambre supérieure (A) pour faire circuler le courant de gaz brûlé contenu dans ladite chambre vers le haut à l'intérieur de celle-ci avant de s'écouler dans ladite chambre inférieure (B), de telle sorte que les poussières contenues dans le gaz brûlé qui ont été capturées par les micro-gouttelettes du liquide de refroidissement tombent par gravité dans ladite chambre supérieure (A) contre le courant ascendant du gaz brûlé;
une plaque collectrice (5; 105) dans ladite chambre supérieure pour récupérer les micro-particules du liquide de refroidissement capturées avec les poussières;
un tuyau d'effluent (10; 110) pour décharger de ladite chambre supérieure (A) le liquide de refroidissement capturé avec les poussières récupéré sur ladite plaque collectrice (5; 105); et
une sortie (6; 106) pour décharger le gaz brûlé exempt de poussières et de contaminants chimiques de ladite chambre inférieure (B).

6. Dispositif selon Revendication 5, dans lequel lesdits moyens de pulvérisation (13; 113) sont montés dans ledit moyen d'entrée (12; 112) pour ledit gaz brûlé et/ou dans ladite chambre supérieure (A).

7. Dispositif selon Revendication 5 ou Revendication 6, dans lequel une cloison horizontale (4; 105) est interposée entre ladite chambre supérieure (A) et ladite chambre inférieure (B), et dans lequel une pluralité de tuyaux (8; 108) servant à mettre ladite chambre inférieure (B) en communication avec ladite chambre supérieure (A) pour recevoir ledit gaz brûlé exempt de poussière s'étendent vers le bas depuis ladite cloison (4; 105) dans ladite chambre inférieure (B).

8. Dispositif selon Revendication 7, dans lequel ladite surface supérieure de ladite cloison (105) constitue ladite plaque collectrice à l'intérieure de ladite chambre supérieure (A).

9. Dispositif selon Revendication 8, dans laquelle lesdits tuyaux (108) s'étendent aussi vers le haut depuis ladite cloison (105) dans ladite chambre supérieure (A), la surface extérieure desdits tuyaux constituant ledit moyen de paroi perpendiculaire.

10. Dispositif selon Revendication 5, dans lequel, à l'intérieur de ladite chambre supérieure (A) est prévue une cloison cylindrique s'étendant perpendiculairement (9), dont l'extrémité supérieure est espacée du toit (3) de ladite chambre supérieure, ladite cloison perpendiculaire (9) constituant ledit moyen de paroi perpendiculaire, et ladite plaque collectrice (5) étant située autour de l'extrémité inférieure de ladite cloison perpendiculaire (9) s'étendant horizontalement jusqu'aux parois latérales de ladite chambre supérieure (A);
dans lequel ledit moyen d'entrée (12) pour introduire le gaz usé comprend une ouverture (11) dans une paroi latérale de la chambre supérieure (A) dont l'extrémité supérieure est positionnée en-dessous de ladite extrémité supérieure de ladite cloison perpendiculaire (9) et dont l'extrémité inférieure est positionnée au-dessus de ladite plaque collectrice (5), et un tuyau d'entrée (12) relié à ladite ouverture (11);
dans lequel une cloison horizontale (4) est interposée entre ladite chambre supérieure (A) et ladite chambre inférieure (B);
dans lequel une pluralité de tuyaux (8) servant à mettre ladite chambre inférieure (B) en communication avec ladite chambre supérieure (A) pour recevoir le gaz brûlé exempt de poussière qui en provient s'étendent vers le bas depuis ladite cloison horizontale (4) dans ladite chambre inférieure (B);
dans lequel ladite sortie (6) pour décharger le gaz brûlé exempt de poussières et exempt de contaminants chimiques de ladite chambre inférieure (B) est agencée de manière à s'étendre vers le haut à travers l'intérieur de ladite cloison cylindrique (9) à partir d'une partie ouverte centrale de ladite cloison horizontale, ladite sortie (6) s'étendant à travers ledit toit (3) de ladite chambre supérieure; et
dans lequel lesdits moyens de pulvérisation (13) sont montés à l'intérieur dudit tuyau d'entrée (12) et/ou dans ladite chambre supérieure (A).

11. Dispositif selon Revendication 5 dans lequel, à l'intérieur de ladite chambre supérieure (A), est prévue une cloison perpendiculaire en forme de plaque (9) dont l'extrémité supérieure est espacée du toit (3) de ladite chambre supérieure, ladite cloison perpendiculaire (9) constituant ledit moyen de paroi perpendiculaire, et ladite plaque collectrice (5) s'étendant horizontalement entre l'extrémité inférieure de ladite cloison perpendiculaire et une paroi latérale de ladite chambre supérieure (A);
dans lequel ledit moyen d'entrée pour introduire le gaz brûlé comprend une ouverture (11) dans ladite paroi latérale de ladite chambre supérieure (A) dont l'extrémité supérieure est positionnée en-dessous de ladite extrémité supérieure de ladite cloison perpendiculaire (9) et dont l'extrémité inférieure est positionnée au-dessus de ladite plaque collectrice (5), et un tuyau d'entrée (12) relié à ladite ouverture (11);
dans lequel une cloison horizontale (4) est interposée entre ladite chambre supérieure (A) et ladite chambre inférieure (B);
dans lequel une pluralité de tuyaux (8) servant à mettre ladite chambre inférieure (B) en communication avec ladite chambre supérieure (A) pour recevoir le gaz brûlé exempt de poussières qui en provient s'étendent vers le bas à partir de ladite cloison horizontale (4) dans ladite chambre inférieure (B);
dans lequel ladite sortie (6) pour décharger le gaz brûlé exempt de poussières et exempt de contaminants chimiques de ladite chambre inférieure (B) part de ladite paroi latérale supérieure de ladite chambre inférieure (B); et
dans lequel lesdits moyens de pulvérisation (13) sont montés à l'intérieur dudit tuyau d'entrée (12) et/ou dans ladite chambre supérieure (A).

12. Dispositif selon Revendication 5 dans lequel ledit moyen d'entrée pour introduire le gaz brûlé comprend une ouverture dans une paroi latérale de la chambre supérieure (A) et un tuyau d'entrée (112) relié à ladite ouverture;
dans lequel ladite sortie (106) pour décharger le gaz brûlé exempt de poussière et de contaminants chimiques de ladite chambre inférieure (B) est prévue sur une paroi latérale de ladite chambre inférieure;
dans lequel ladite plaque collectrice (105) est interposée horizontalement entre ladite chambre supérieure (A) et ladite chambre inférieure (B);
dans lequel un ou plusieurs tuyaux (108) pénètrent à travers ladite plaque collectrice pour mettre ladite chambre inférieure (B) en communication avec ladite chambre supérieure (A) pour recevoir le gaz brûlé exempt de poussière qui en provient, ledit ou lesdits tuyaux (108) s'étendant chacun vers le haut dans la chambre supérieure (A) de telle sorte que leur extrémité supérieure est positionnée au-dessus de ladite ouverture d'entrée de gaz mais en-dessous du toit (103) de la chambre supérieure (A), et vers le bas dans ladite chambre inférieure (B) de telle sorte que leur extrémité inférieure soit positionnée en-dessous de ladite sortie de gaz (106) mais au-dessus du plancher de ladite chambre inférieure (B), les surfaces extérieures dudit ou desdits tuyaux (108) s'étendant dans ladite chambre supérieure formant ledit moyen de paroi perpendiculaire; et
dans lequel lesdits moyens de pulvérisation (113) sont montés à l'intérieur dudit tuyau d'entrée (112) et/ou dans ladite chambre supérieure (A).
